# EUROPEAN PATENT APPLICATION

(11) **EP 2 639 148 A1**
(43) Date of publication of application: **18.09.2013**
(21) Application number: 13156284.5
(22) Date of filing: 22.02.2013
(51) Int. Cl.: B62K 15/00, B62K 19/36

(54) **Connecting mechanism and foldable bicycle frame therewith**

(30) Priority: 16.03.2012 TW 101204803 U
(71) Applicant: Darfon Electronics Corp., Taoyuan 33341 (TW)
(72) Inventor: Chen, Ji-Huang, 33341 Taoyuan (TW)
(74) Representative: Becker Kurig Straus

(57) **Abstract**

A connecting mechanism (1) for connecting two supports (22,24) of a foldable bicycle frame firmly includes a locking member (12) disposed on one support (22), a springing structure (14) disposed between the locking member (12) and the support (22), and a locked pin (16) disposed on the other support (24). The cross section of a through hole (1242) of the locking member is slightly larger than that of the locked pin (16). When the locked pin (16) has been inserted into the through hole (1242), the springing structure (14) urges the locking member (12) to rotate so as to wedge the locked pin (16) in the through hole (1242). Even if abrasion occurs therein, the locked pin (16) still can be jammed in the through hole (1242) effectively. Therefore, the connecting mechanism (1) is easy to operate and still can provide effective and reliable connection after a long use.

## Description

### Field of the Invention

The invention relates to a connecting mechanism and a related foldable bicycle frame according to the pre-characterizing clauses of claims 1 and 9.

### Background of the Invention

Current foldable bicycle frames use folding mechanisms which perform folding the bicycle frame by screws or a quick release for transport and also can maintain the structural stability of the foldable bicycle frame to a certain extent after expanded. However, the method of fixing by screws requires additional tools. The fixing effect thereby often depends on the holding force by the screws; the holding force is usually affected by the screwing operation by a user. These may induce an insufficient reliability of the fixing by screws. When the insufficient reliability becomes worse, the riding safety therefor is also influenced. Furthermore, a current quick release uses a spring and a cam lever to produce stable structure interference for fixing. The operation therefor includes many steps and is inconvenient. After a long use, abrasion will occur on the cam lever, leading that even when the quick release is at the fixed state, the cam lever still may be loosened. When the loosening issue becomes worse, the foldable bicycle frame maybe loosened at the folding portion, which induces danger to the riding safety. Therefore, the above folding mechanisms are unable to satisfy the requirements of reliable fixing and convenient operation.

### Summary of the Invention

This in mind, the present invention aims at providing a connecting mechanism and a related foldable bicycle frame, which use a structural engagement between a locking member having a through hole and a locked pin for stably connecting the foldable bicycle frame and can works reliably even after a long use.

This is achieved by a connecting mechanism and a related foldable bicycle frame according to claims 1 and 9. The dependent claims pertain to corresponding further developments and improvements.

As will be seen more clearly from the detailed description following below, the claimed connecting mechanism is installed on the claimed foldable bicycle frame and includes a locking member, a springing structure, and a locked pin. The locking member and the locked pin are disposed on a first and a second supports of the foldable bicycle frame respectively. The springing structure is disposed between the first support and the locking member. When the locking pin has been inserted into a through hole of the locking member, the springing structure can urge the locking member to rotate relative to the first support so as to wedge the locked pin in the through hole. Furthermore, the wedging force to the locked pin by the locking member becomes larger when the locked pin tends to move in an accordant direction to the above rotation of the locking member, so that the locked pin still can firmly fixed by the locking member even if abrasion occurs on locked pin or the through hole. Therefore, the claimed connecting mechanism can provide reliable connection to the claimed foldable bicycle frame.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof:
FIG. 1 is a sectional schematic diagram illustrating a connecting mechanism used for a foldable bicycle frame of a preferred embodiment according to the invention,
FIG. 2 is a sectional schematic diagram illustrating an unlocked state of the connecting mechanism in FIG. 1,
FIG. 3 is a sectional schematic diagram illustrating a connecting mechanism used for a foldable bicycle frame of another embodiment according to the invention,
FIG. 4 is a sectional schematic diagram illustrating the connecting mechanism in FIG. 3 is used for another foldable bicycle frame of another embodiment according to the invention,
FIG. 5 is a schematic diagram illustrating a foldable bicycle of a preferred embodiment according to the invention,
FIG. 6 is an enlarged view of a part of the foldable bicycle frame in FIG. 5,
FIG. 7 is an enlarged view of another part of the foldable bicycle frame in FIG. 5,
FIG. 8 is a schematic diagram illustrating the connecting mechanism in FIG. 7 according to another embodiment,
FIG. 9 is an enlarged view of another part partially sectioned of the foldable bicycle frame in FIG. 5,
FIG. 10 is an enlarged view of another part of the foldable bicycle frame in FIG. 5, and
FIG. 11 is a schematic diagram illustrating the foldable bicycle in FIG.5 after folded.

### Detailed Description

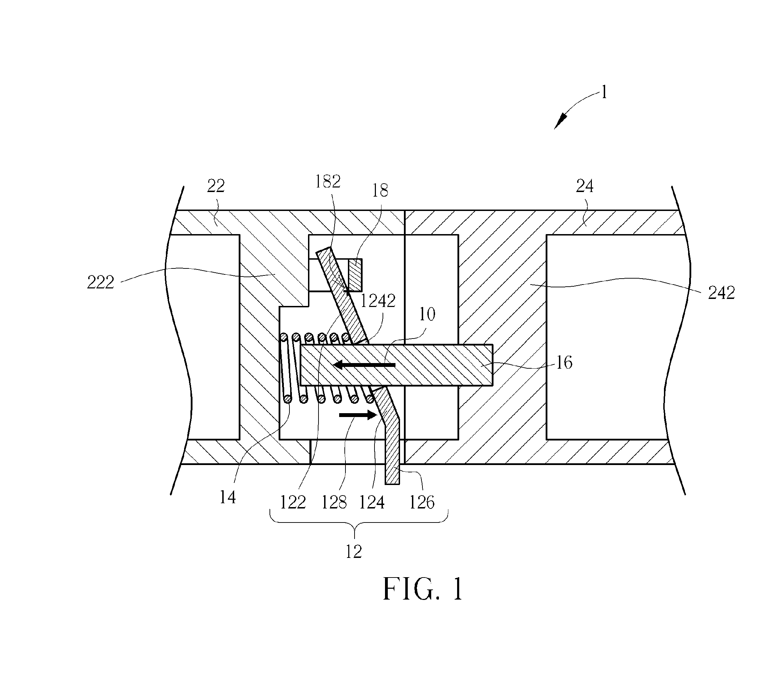

Please refer to FIG. 1, which is a sectional schematic diagram illustrating a connecting mechanism 1 used for a foldable bicycle frame of a preferred embodiment according to the invention. For a simple and clear illustration of the motion of the connecting mechanism 1, a first support 22 and a second support 24 of the foldable bicycle frame are illustrated schematically in FIG. 1. In practice, depending on the disposition of the connecting mechanism 1 on the foldable bicycle frame, the first support 22 and the second support 24 may be various structural supports, such as a front frame and a rear frame respectively, a hand support and a front frame respectively, a rear frame and a seat post respectively and so on. The connecting mechanism 1 is disposed on the first support 22 and the second support 24 so that the first support 22 and the second support 24 can be connected firmly by the connecting mechanism 1.

As shown in FIG. 1, the connecting mechanism 1 thereon defines a movable direction 10 and includes a locking member 12, a springing structure 14, a locked pin 16, and a pivotal connection structure 18. The locking member 12 is disposed on the first support 22 and includes a connection portion 122, a locking portion 124, and a reset manipulation portion 126. The locking portion 124 connects the connection portion 122 and the reset manipulation portion 126. In practice, the locking member 12 can be formed in one piece by a single metal sheet, but the invention is not limited thereto. The locking member 12 by the connection portion 122 is pivotally connected to a first connection portion 222 of the first support 22 by a pivotal connection structure 18, such that the locking member 12 can rotate relative to the first support 22 substantially at a pivotal axis 182 (indicated by a cross mark in FIG. 1). The pivotal axis 182 is perpendicular to the movable direction 10. In the embodiment, the pivotal connection structure 18 is an n-shaped cover part across the connection portion 122 and fixed on the first support 22, but the invention is not limited thereto. For example, a pivotal shaft can be used to be the pivotal connection structure to directly pin-joining the connection portion 122 onto the first support 22; in this case, the center axis of the pivotal shaft is regarded as the above pivotal axis. The locking portion 124 has a through hole 1242. The movable direction 10 passes through the through hole 1242. The reset manipulation portion 126 is disposed to protrude out of the first support 22 for a user to operate conveniently outside the first support 22 (e.g. by pressing), but the invention is not limited thereto. For example, a hollow is formed on the first support 22 to expose out the reset manipulation portion 126 so that the user also can stretch into the hollow by a finger for the operation.

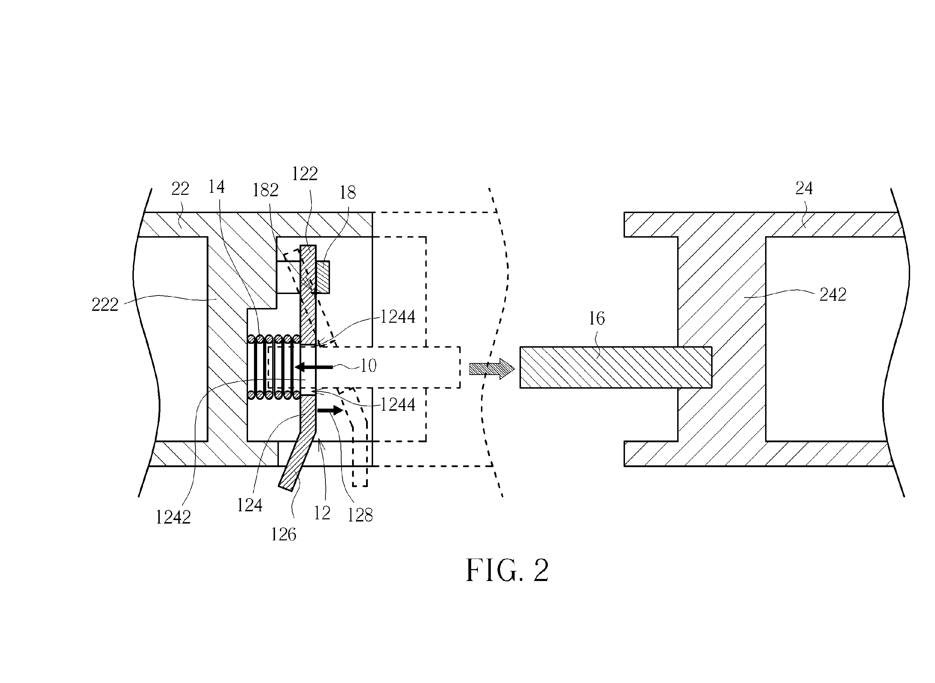

The springing structure 14 is disposed on the first support 22 to urge the locking member 12 to rotate in a locking direction 128 substantially reverse to the movable direction 10. In the embodiment, the springing structure 14 is a spring, compressively disposed between the first connection portion 222 and the locking member 12, but the invention is not limited there to. In principle, any mechanism which can produce a resilient force to rotate the locking member 12 in the locking direction 128 is applicable to the invention, such as bent spring sheet. The locked pin 16 is fixed on a second connection portion 242 of the second support 24. During the connection of the second support 24 with the first support 22, the locked pin 16 is inserted into the through hole 1242 in the movable direction 10. Because the cross section of the through hole 1242 is slightly larger than the cross section of the locked pin 16, the locked pin 16 can be easily inserted into the through hole 1242. Furthermore, during the insertion of the locked pin 16 into the through hole 1242, the locking member 12 may rotate in the movable direction 10 due to the frictional force induced between the inner wall of the through hole 1242 and the surface of the locked pin 16, which makes a gap 1244 (referring to FIG. 2) larger between the locked pin 16 and the through hole 1242 to facilitate the insertion of the locked pin 16. Therefore, because of the pushing effect of the springing structure 14 to the locking member 12, the opening direction of the through hole 1242 and the movable direction 10 form a certain included angle, i.e. disposed obliquely, so that the locked pin 16 still can be inserted into the through hole 1424 smoothly.

When the locked pin 16 has been inserted into the through hole 1242, the springing structure 14 urges the locking member 12 to rotate substantially in the locking direction 128 until the through hole 1242 wedges the locked pin 16. Therefore the connecting mechanism 1 is at a locked state, as shown in FIG. 1. At this moment, if the locked pin 16 is intended to depart from the through hole 1242 in the locking direction 128, the frictional force induced between the inner wall of the through hole 1242 and the surface of the locked pin 16 will produce a tendency of the locking member 12 to rotate in the locking direction 128 so that the locked pin 16 is wedged by the through hole 1242 more tightly, which achieves an automatically locking effect of the first support 22 and the second support 24. It is added that when the locked pin 16 has been inserted into the through hole 1242, the locked pin 16 passes through the springing structure 14 (e.g. the spring), which is conducive to the stability of the through hole 1242 wedging the locked pin 16; however, the invention is not limited thereto.

Please refer to FIG. 1 and FIG. 2. FIG. 2 is a sectional schematic diagram illustrating an unlocked state of the connecting mechanism 1. If the connecting mechanism 1 is required to be unlocked, the user can operate (e.g. by pressing) the reset manipulation portion 126 such that the locking portion 124 can rotate substantially in the movable direction 10 so as to form the gap 1244 between the locked pin 16 and the through hole 1242. At this moment, the locked pin 16 can be easily departed from the through hole 1242; that is, the second support 24 can be departed from the first support 22, so as to fold and store the foldable bicycle frame easily. In short, the locking member 12 has an effect of automatically preventing the locked pin 16 from departing from the through hole 1242 in the locking direction 128 and another effect of urging the locked pin 16 to be inserted into the through hole 1242 in the movable direction 10. Therefore, the connecting mechanism 1 can provide a firm and reliable connecting mechanism to the first support 22 and the second support 24. It is added that when the locked pin 16 has been inserted into the through hole 1242, if the locked pin 16 is loaded with a force in the movable direction 10, after the resilient force produced by the springing structure 14 is overcame, a moving tendency of the locked pin 16 can drive the locking member 12 to move substantially in the movable direction 10 so as to form the gap 1244 between the locked pin 16 and the through hole 1242 so that the locked pin 16 can keep in moving in the movable direction 10, which is conducive to a tighter connection of the first support 22 with the second support 24.

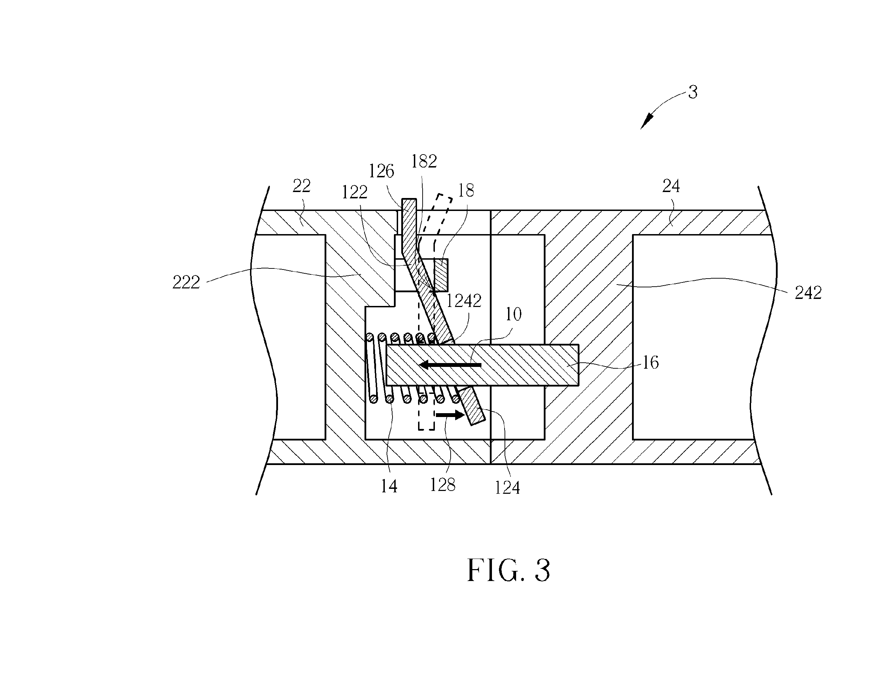

Please refer to FIG. 1 and FIG. 3. FIG. 3 is a sectional schematic diagram illustrating a connecting mechanism 3 used for a foldable bicycle frame of another embodiment according to the invention. The connecting mechanism 3 is similar in structure to the connecting mechanism 1 in FIG. 1. The main difference therebetween is that in the locking member 12 of the connecting mechanism 3, the reset manipulation portion 126 and the locking portion 124 are located at two sides of the pivotal connection structure 18. So, if the locked pin 16 is required to be unlocked from the locking portion 124 (i.e. the through hole 1242 thereof), the reset manipulation portion 126 is pulled outwards relative to the first support 22 so as to rotate the locking portion 124 substantially in the movable direction 10, as shown in the dashed lines in FIG. 3, which also forms the gap 1244 between the locked pin 16 and the through hole 1242. For other descriptions about locking and unlocking operations of the connecting mechanism 3 in FIG. 3, please refer to the relevant descriptions of the connecting mechanism 1 in FIG. 1; they will not described in addition.

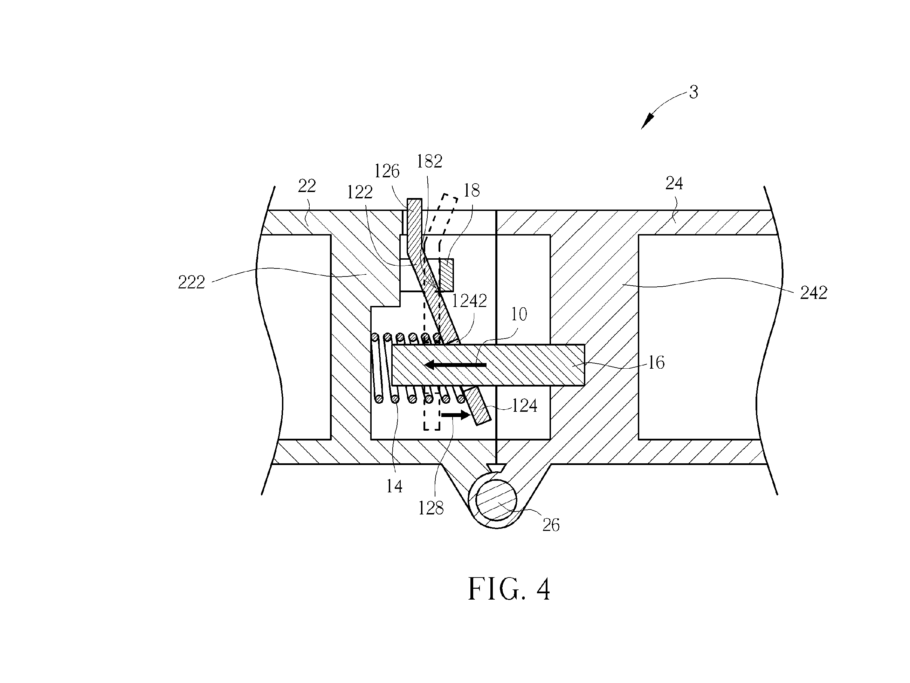

Please refer to FIG. 3 and FIG. 4. FIG. 4 is a sectional schematic diagram illustrating the connecting mechanism 3 is used for another foldable bicycle frame of another embodiment according to the invention. In FIG. 4, the first support 22 and the second support 24 are also pivotally connected through the first connection portion 222 and the second connection portion 242 respectively by a pivotal shaft 26, so when the connecting mechanism 3 is at the unlocked state, the second support 24 and the first support 22 can be rotated and folded relatively for convenience of storage.

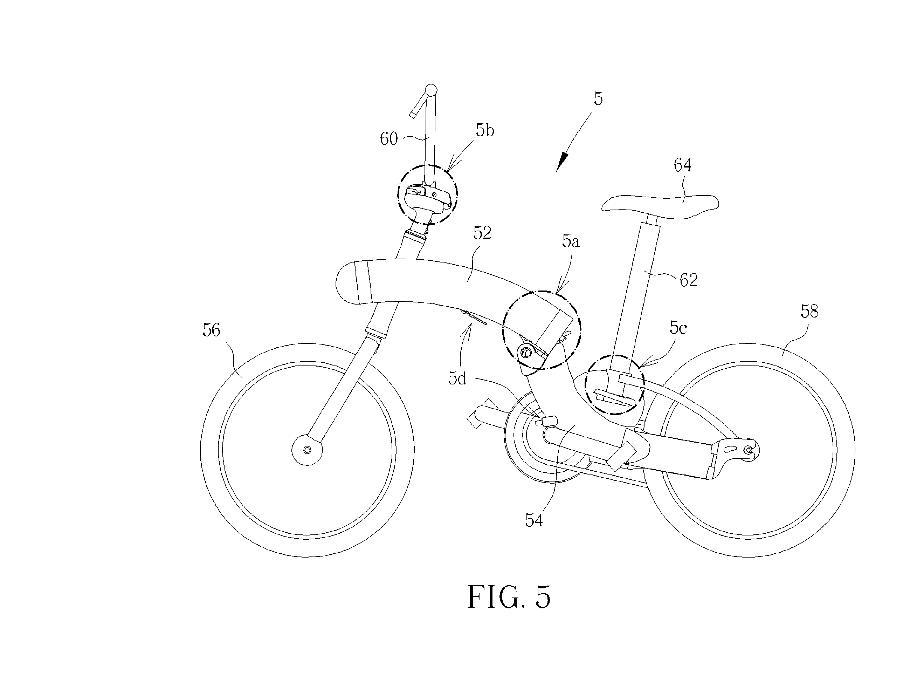

Please refer to FIG. 5, which is a schematic diagram illustrating a foldable bicycle of a preferred embodiment according to the invention. The foldable bicycle has a foldable bicycle frame 5. The foldable bicycle frame 5 is equipped with several connecting mechanisms 5a, 5b, 5c and 5d of the invention. Therein, the connecting mechanisms 5a, 5b and 5c are indicated by chain-dotted circles; the location of the connecting mechanism 5d is indicated by an arrow. For the motion principle and the relevant description of the connecting mechanisms 5a, 5b, 5c and 5d, please refer to the relevant description of the connecting mechanism 1; they will not described in addition. The following will focus on the disposition environment.

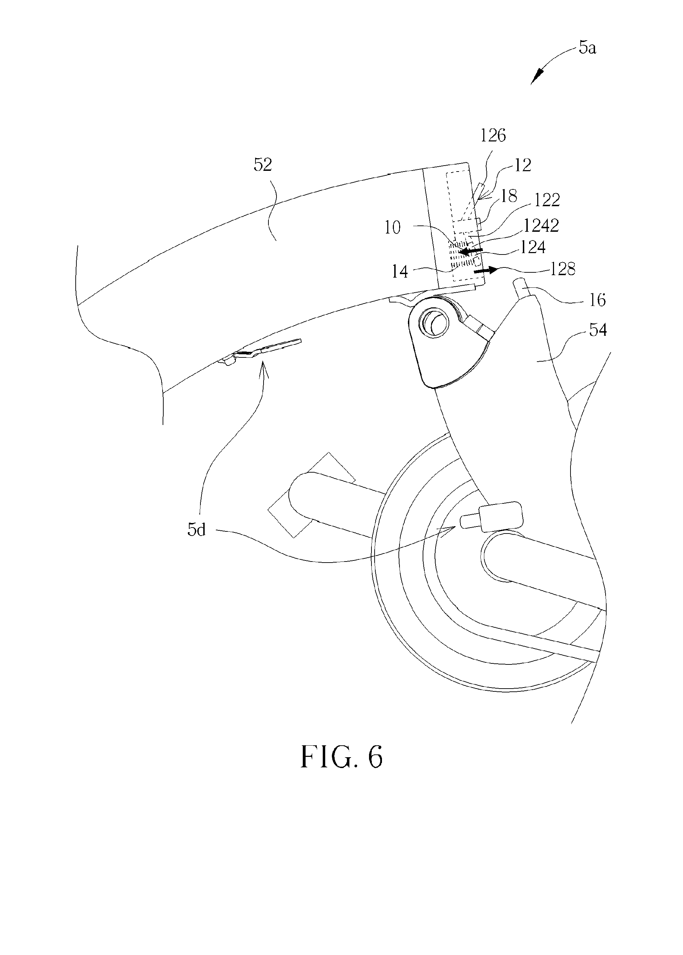

Please refer to FIG. 5 and FIG. 6. FIG. 6 is an enlarged view of a part of the foldable bicycle frame 5. Therein, the connecting mechanism 5a in FIG. 6 is shown to be at an unlock state; shielded portions of the main components are shown in dashed lines. The locking and unlocking motions of the connecting mechanism 5a can refer to the relevant description of the connecting mechanism 3 and will not described in addition. As shown in FIG. 5, the connecting mechanism 5a is disposed on a front frame 52 and a rear frame 54. The front frame 52 corresponds to the first support 22 in FIG. 4 and can be connected to a front wheel 56; the rear frame 54 corresponds to the second support 24 in FIG. 4 and can be connected to a rear wheel 58. Therefore, when the foldable bicycle frame 5 is expanding from a folded state, the rear frame 34 rotates relative to the front frame 52. When the locked pin 16 approaches the locking member 12, the locked pin 16 can be inserted into the through hole 1242 in the movable direction 10 until the front frame 52 and the rear frame 54 cannot rotate relatively anymore due to a structural interference thereof. At this moment, the front frame 52 and the rear frame 54 are expanded completely. In the meanwhile, because of the automatically locking effect of the connecting mechanism 5a, the front frame 52 and the rear frame 54 can be unlocked just by themselves unless by operating the locking member 12, which achieves an effect of firmly connecting the front frame 52 with the rear frame 54. Similarly, if the front frame 52 and the rear frame 54 are required to be folded for storage, the user can operate the locking member 12 to unlock the connecting mechanism 5a so that the front frame 52 and the rear frame 54 can be rotated relatively.

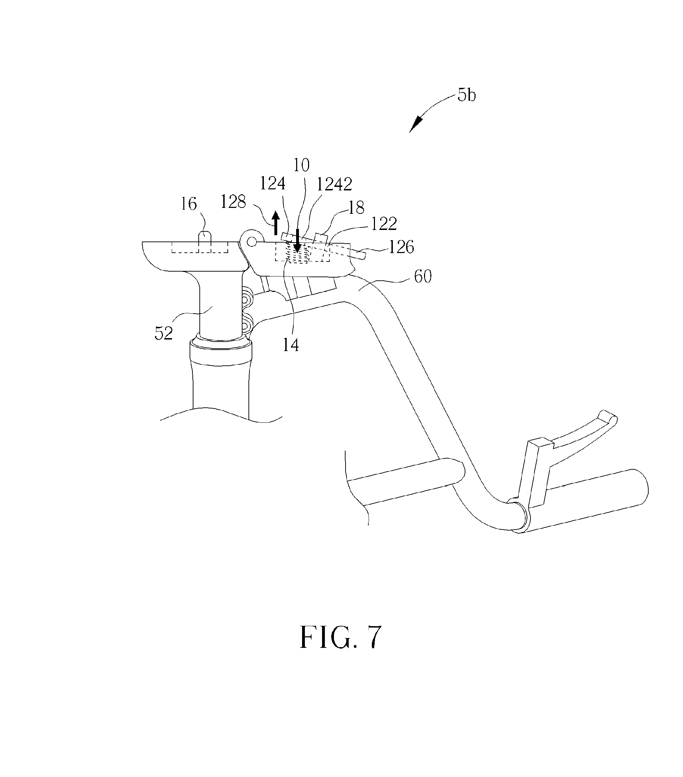

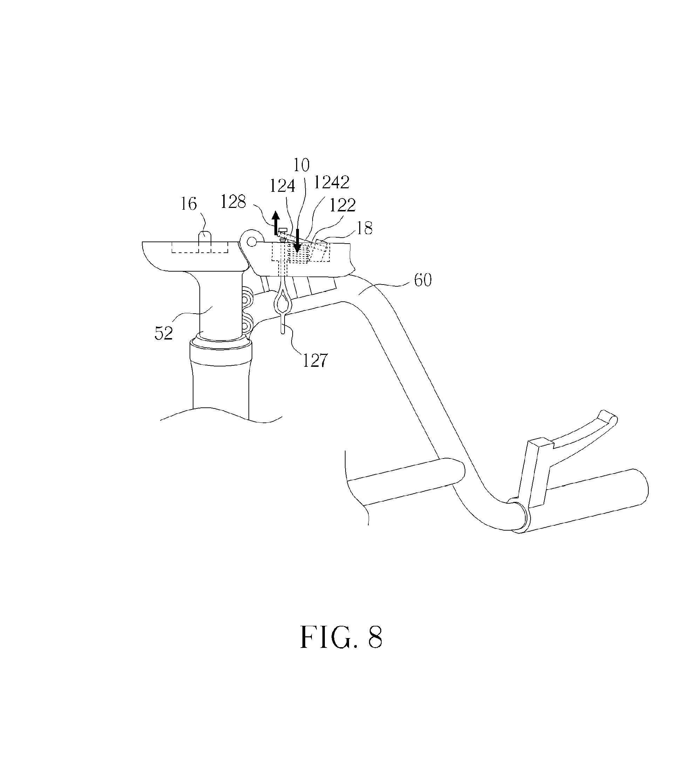

Please refer to FIG. 5 and FIG. 7. FIG. 7 is an enlarged view of another part of the foldable bicycle frame 5. Therein, the connecting mechanism 5b in FIG. 7 is shown to be at an unlock state; shielded portions of the main components are shown in dashed lines. The locking and unlocking motions of the connecting mechanism 5b can refer to the relevant description of the connecting mechanism 3 and will not described in addition. As shown in FIG. 5, the connecting mechanism 5b is disposed on a hand support 60 and the front frame 52. The hand support 60 includes a handlebar and corresponds to the first support 22 in FIG. 4; the front frame 52 corresponds to the second support 24 in FIG. 4. Similarly, by use of the automatically locking effect of the connecting mechanism 5b, the hand support 60 and the front frame 52 can be connected firmly and reliably. Besides, the connecting mechanism 5b can be unlocked by operating the locking member 12, so as to fold the hand support 60 and the front frame 52 for storage. It is added that in the embodiment, in order to unlock the connecting mechanism 5b more conveniently for the user, the reset manipulation portion 126 can be modified to be or with a pull link or a pull cable 127, as shown in FIG. 8. The user can pull the pull link or the pull cable 127 to rotate the locking portion 124 substantially in the movable direction 10 so as to achieve the purpose of unlocking the connecting mechanism 5b. In addition, the loading direction for pulling the pull link or the pull cable 127 is conducive to rotating and folding the hand support 60 relative to the front frame 52.

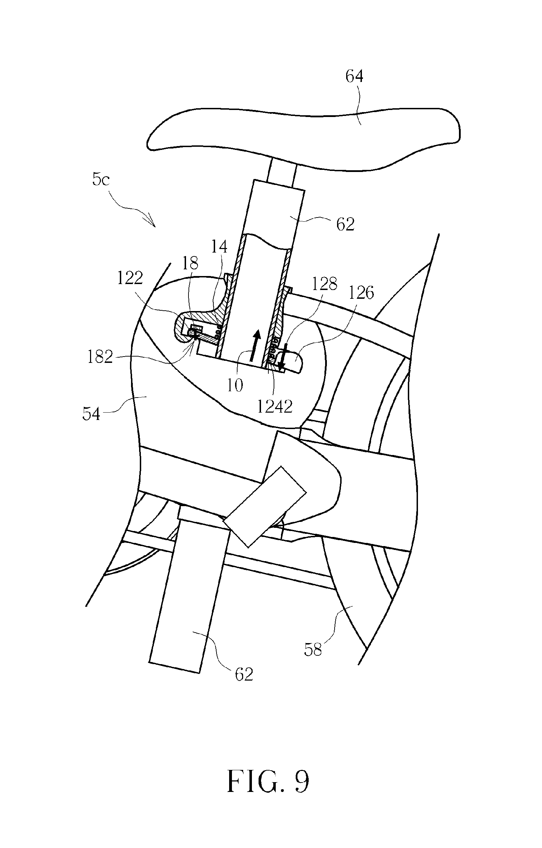

Please refer to FIG. 1 and FIG. 9. FIG. 9 is an enlarged view of another part partially sectioned of the foldable bicycle frame 5. The connecting mechanism 5c is disposed on the rear frame 54 and a seat post 62. The locking and unlocking motions of the connecting mechanism 5c can refer to the relevant description of the connecting mechanism 1 and will not described in addition. The rear frame 54 corresponds to the first support 22 in FIG. 1; the seat post 62 corresponds to the second support 24 in FIG. 1 and is connected to a saddle 64. It is added in addition that in the embodiment, the rear frame 54 and the seat post 62 does not need to be folded, so the connecting mechanism 5c is used for adjusting and fixing the location of the seat post 62 relative to the rear frame 54. In the embodiment, the seat post 62 passes through the rear frame 54 and is regarded as the locked pin of the connecting mechanism 5c directly. Thereby, a locking force applied to the locked pin by the locking member 12 can be transferred to the seat post 62 directly, which increases the stability of the rear frame 54 supporting the seat post 62. As shown in FIG. 9, similarly, when the user operates the reset manipulation portion 126 of the locking member 12 for unlocking the connecting mechanism 5c, the seat post 62 together with the saddle 64 also can be adjusted upward or downward. As shown in FIG. 9, the seat post 62 together with the saddle 64 have been adjusted downward so that the volume of the foldable bicycle frame 5 shrinks, which is conducive to the storage of the foldable bicycle frame 5.

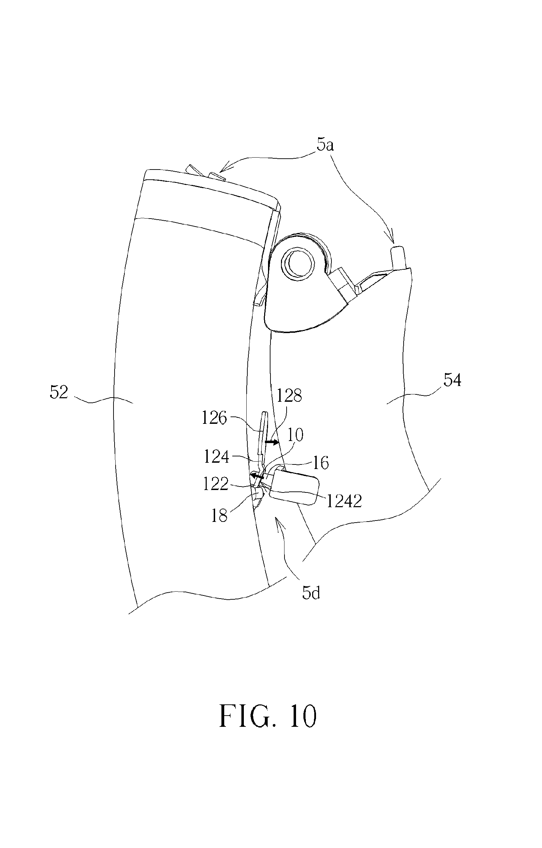

Please refer to FIG. 1 and FIG. 10. FIG. 10 is an enlarged view of another part of the foldable bicycle frame 5. Therein, the connecting mechanism 5d in FIG. 10 is shown to be at a locked state. The connecting mechanism 5d is also disposed on the front frame 52 and the rear frame 54. The locking and unlocking motions of the connecting mechanism 5d can refer to the relevant description of the connecting mechanism 1 and will not described in addition. The front frame 52 corresponds to the first support 22 in FIG. 1; the rear frame 54 corresponds to the second support 24 in FIG. 1. It is added in addition that in the embodiment, the connecting mechanism 5d is used only for the foldable bicycle frame 5 in a folded state, so as to firmly fixing the front frame 52 and the rear frame 54 after folded and to avoid an unexpected expanding. In the embodiment, the connecting mechanism 5d is disposed on the middle portions of the front frame 52 and the rear frame 54 respectively. The middle portions is located away from the pivotal connection of the front frame 52 with the rear frame 54 in a certain distance, which satisfies the operation convenience of the connecting mechanism 5d and the locking forcing and connecting stability by the connecting mechanism 5d to both the front frame 52 and the rear frame 54. Thereby, when the front frame 52 and the rear frame 54 are being rotated for folding, the locked pin 16 can be inserted into the through hole 1242 to be wedged by the through hole 1242, so that the front frame 52 and the rear frame 54 are kept in the folded state stably. Similarly, the user can operate the reset manipulation portion 126 of the locking member 12 to unlock the connecting mechanism 5d, so that the front frame 52 and the rear frame 54 can be rotate to expand from the folded state. In the embodiment, the firm connection of the front frame 52 with the rear frame 54 after expanding is performed by the connecting mechanism 5a, which is illustrated by the foregoing description and will not repeated.

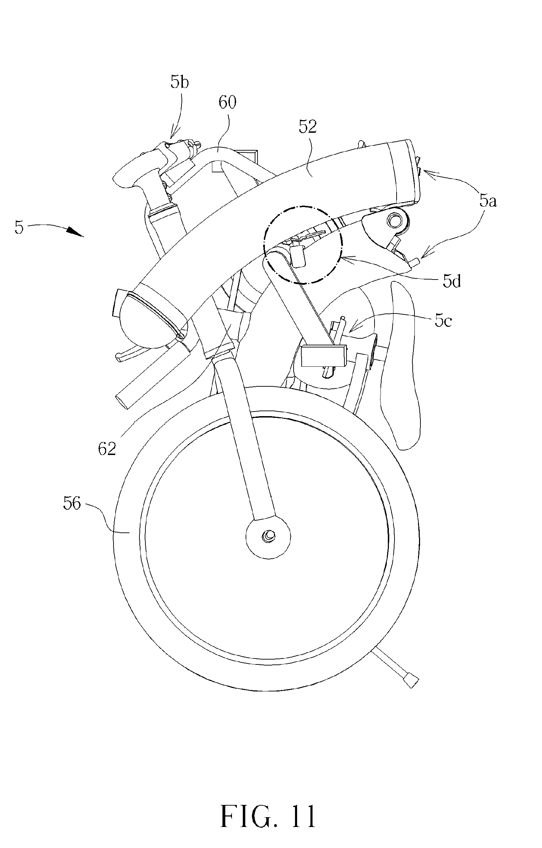

Please refer to FIG. 11, which is a schematic diagram illustrating the foldable bicycle in FIG.5 after folded. Based on the above descriptions about the operations of the connecting mechanisms 5a, 5b, 5c and 5d, when the connecting mechanisms 5a and 5b are unlocked so that the front frame 52, the rear frame 54 and the hand support 60 can be folded, and the connecting mechanism 5c is unlocked so that the relative distance between the seat post 62 and the rear frame 54 shrinks, the connecting mechanism 5d can be operated to lock and fix the front frame 52 and the rear frame 54 after folding, so as to complete the folding operation of the foldable bicycle frame 5. The folded foldable bicycle frame 5 (or the folded foldable bicycle) is shown by FIG. 11.

It is added that in the above embodiments, the connecting mechanisms 1, 3, 5a, 5b, 5c and 5d are illustrated with the single locked pin 16, but the invention is not limited thereto. In practice, the connecting mechanism of the invention also can use an engagement structure having multiple sets of a locked pin with a corresponding through hole for providing more stable locking force to the supports, which is also conducive to the enhancement of the operation reliability of the connecting mechanism. Therein, for the convenience of the unlocking operation of the connecting mechanism to the user, the multiple through holes can still be formed on the same locking portion. The engagement structure having multiple sets of one locked pin with one corresponding through hole can be driven by a single reset manipulation portion to be unlocked. Furthermore, in practice, the locked pin 16 is not limited to a rod; rectangular columns or hexagonal columns are applicable.

As discussed above, compared with the prior art, the locking and unlocking operations of the connecting mechanism of the invention are convenient and works effectively and reliably even after a long use, so the foldable bicycle frame of the invention can be connected firmly with the stability of the whole structure, so as to ensure the safety for the rider. Therefore, the invention can effectively solve the problems in the prior art of the inconvenient fixing operation and the loosening issue at the folding portion of the bicycle frame due to the occurrence of the abrasion on the cam lever.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A connecting mechanism (1) for a foldable bicycle frame, the foldable bicycle frame comprising a first support (22) and a second support (24), the first support (22) and the second support (24) being capable of being connected firmly by the connecting mechanism (1), the connecting mechanism (1) **characterized by** comprising:
a locking member (12) having a through hole (1242), the locking member (12) being disposed on the first support (22) and capable of rotating relative to the first support (22) substantially at a pivotal axis (182), wherein the connecting mechanism (1) thereon defines a movable direction (10) passing through the through hole (1242) and perpendicular to the pivotal axis (182);
a springing structure (14) disposed on the first support (22) so as to urge the locking member (12) to rotate in a locking direction (128) substantially reverse to the movable direction (10); and
a locked pin (16) disposed on the second support (24), a cross section of the through hole (1242) being slightly larger than a cross section of the locked pin (16), when the locked pin (16) has been inserted into the through hole (1242), the springing structure (14) urging the locking member (12) to rotate substantially in the locking direction (128) so that the through hole (1242) is capable of wedging the locked pin (16).

2. The connecting mechanism (1) of claim 1, **characterized in that** the locking member (12) comprises a locking portion (124) and a reset manipulation portion (126), the reset manipulation portion (126) is connected to the locking portion (124) and protrudes out of the first support (22), the through hole (1242) is formed on the locking portion (124), and when the through hole (1242) wedges the locked pin (16),
the reset manipulation portion (126) is operable to rotate the locking portion (124) substantially in the movable direction (10) such that a gap (1244) is formed between the locked pin (16) and the through hole (1242).

3. The connecting mechanism (1) of claim 2, **characterized in that** the reset manipulation portion (126) is a pull link or a pull cable (127).

4. The connecting mechanism (1) of claim 1, **characterized in that** the springing structure (14) is a spring compressively disposed between the first support (22) and the locking member (12).

5. The connecting mechanism (1) of claim 4, **characterized in that** when the locked pin (16) has been inserted into the through hole (1242) in the movable direction (10), the locked pin (16) passes through the spring (14).

6. The connecting mechanism (1) of claim 1, **characterized by** further comprising a pivotal connection structure (18), wherein the locking member (12) comprises a locking portion (124) and a connection portion (122) connected to the locking portion (124), the through hole (1242) is formed on the locking portion (124), and the connection portion (122) is pivotally connected to the first support (22) by the pivotal connection structure (18).

7. The connecting mechanism (1) of claim 6, **characterized in that** the pivotal connection structure (18) is an n-shaped cover part disposed across the connection portion (122) and fixed on the first support (22).

8. The connecting mechanism (1) of claim 1, the first support (22) comprising a first connection portion (222), the second support (24) comprising a second connection portion (242), the first support (22) and the second support (24) being pivotally connected by the first connection portion (222) and the second connection portion (242), **characterized in that** the locking member (12) and the springing structure (14) are disposed on the first connection portion (222), and the locked pin (16) is disposed on the second connection portion (242).

9. A foldable bicycle frame, **characterized by** comprising:
a first support (22);
a second support (24); and
a connecting mechanism (1) thereon defining a movable direction (10), the first support (22) and the second support (24) being capable of being connected firmly by the connecting mechanism (1), the connecting mechanism (1) comprising:
a locking member (12) having a through hole (1242), the locking member (12) being disposed on the first support (22) and capable of rotating relative to the first support (22) substantially at a pivotal axis (182), the movable direction (10) passing through the through hole (1242) and being perpendicular to the pivotal axis (182);
a springing structure (14) disposed on the first support (22) so as to urge the locking member (12) to rotate in a locking direction (128) substantially reverse to the movable direction (10); and
a locked pin (16) disposed on the second support (24), a cross section of the through hole (1242) being slightly larger than a cross section of the locked pin (16), when the locked pin (16) has been inserted into the through hole (1242), the springing structure (14) urging the locking member (12) to rotate substantially in the locking direction (128) so that the through hole (1242) is capable of wedging the locked pin (16).

10. The foldable bicycle frame of claim 9, **characterized in that** the locking member (12) comprises a locking portion (124) and a reset manipulation portion (126), the reset manipulation portion (126) is connected to the locking portion (124) and protrudes out of the first support (22), the through hole (1242) is formed on the locking portion (124), and when the through hole (1242) wedges the locked pin (16), the reset manipulation portion (126) is operable to rotate the locking portion (124) substantially in the movable direction (10) such that a gap (1244) is formed between the locked pin (16) and the through hole (1242).

11. The foldable bicycle frame of claim 10, **characterized in that** the reset manipulation portion (126) is a pull link or a pull cable (127).

12. The foldable bicycle frame of claim 11, **characterized in that** the first support (22) is a hand support (60), the second support (24) is a front frame (52), and the hand support (60) comprising a handlebar.

13. The foldable bicycle frame of claim 9, **characterized in that** the springing structure (14) is a spring compressively disposed between the first support (22) and the locking member (12).

14. The foldable bicycle frame of claim 13, **characterized in that** when the locked pin (16) has been inserted into the through hole (1242) in the movable direction (10), the locked pin (16) passes through the spring (14).

15. The foldable bicycle frame of claim 9, **characterized in that** the connecting mechanism (1) further comprises a pivotal connection structure (18), the locking member (12) comprises a locking portion (124) and a connection portion (122) connected to the locking portion (124), the through hole (1242) is formed on the locking portion (124), and the connection portion (122) is pivotally connected to the first support (22) by the pivotal connection structure (18).

16. The foldable bicycle frame of claim 15, **characterized in that** the pivotal connection structure (18) is an n-shaped cover part disposed across the connection portion (122) and fixed on the first support (22).

17. The foldable bicycle frame of claim 9, **characterized in that** the first support (22) comprises a first connection portion (222), the second support (24) comprises a second connection portion (242), the first support (22) and the second support (24) are pivotally connected by the first connection portion (222) and the second connection portion (242), the locking member (12) and the springing structure (14) are disposed on the first connection portion (222), and the locked pin (16) is disposed on the second connection portion (242).

18. The foldable bicycle frame of claim 9, **characterized in that** the first support (22) is a front frame (52), the second support (24) is a rear frame (54), the front frame (52) is capable of being connected to a front wheel (56), and the rear frame (54) is capable of being connected to a rear wheel (58).

19. The foldable bicycle frame of claim 18, **characterized in that** the first support (22) and the second support (24) are pivotally connected, and when the first support (22) and the second support (24) rotates relatively to be folded, the locked pin (16) is capable of being inserted into the through hole (1242) to be wedged by the through hole (1242).

20. The foldable bicycle frame of claim 9, **characterized in that** the first support (22) is a rear frame (54), the second support (24) is a seat post (62), the rear frame (54) is capable of being connected to a rear wheel (58), and the seat post (62) is capable of being connected to a saddle (64).
